# EUROPEAN PATENT SPECIFICATION

(11) **EP 1 583 433 B1**
(45) Date of publication and mention of the grant of the patent: **11.03.2009**
(21) Application number: 04700674.7
(22) Date of filing: 08.01.2004
(51) Int. Cl.: A23L 1/30, A23L 1/305

(54) **PREPARATIONS CONTAINING POLYUNSATURATED PHOSPHOLIPIDS, MONOTERPENES AND TRYPTOPHAN AND/OR PHYTOL DERIVATIVES**
ZUBEREITUNGEN ENTHALTEND MEHRFACH UNGESÄTTIGTE PHOSPHOLIPIDE, MONOTERPENE UND TRYPTOPHAN UND/ODER PHYTOL-DERIVATE
PREPARATIONS CONTENANT DES PHOSPHOLIPIDES POLYINSATURES, DES MONOTERPENES ET DES DERIVES DU TRYPTOPHANE ET/OU DU PHYTOL

(30) Priority: 13.01.2003 IT MI20030036
(43) Date of publication of application: 12.10.2005
(73) Proprietor: Hunza di Pistolesi Elvira E C. S.a.S., 20148 Milan (IT)
(72) Inventor: PISTOLESI, Elvira, I-20148 Milano (IT)
(74) Representative: Minoja, Fabrizio
(86) International application number: PCT/EP2004/000066
(87) International publication number: WO 2004/062389

(56) References cited:
- WO-A-99/48386
- WO-A-02/052955
- US-A- 5 434 183
- DATABASE FSTA [Online] INTERNATIONAL FOOD INFORMATION SERVICE (IFIS), FRANkFURT-MAIN, DE; MARIANI C ET AL: "Structure of olive oil waxes." XP002284545 Database accession no. 2003-00-n0037 & RIVISTA ITALIANA DELLE SOSTANZE GRASSE, vol. 79, no. 3, 2002, pages 49-57, MILAN, ITALY

## Description

This invention relates to pharmaceutical or dietetic compositions containing phospholipids enriched in polyunsaturated fatty acids, monoterpenes and at least one tryptophan and/or phytol derivative in form of inverted micelles and vegetable or marine oils.

It has long been known that the administration with the diet of suitable doses of polyunsaturated acids, such as eicosapentaenoic acid, docosahexaneoic acid, α-linoleic acid, γ-linolenic acid, di-homo-γ-linolenic acid, etc., a useful adjuvant to therapies designed to prevent and/or treat aging and the numerous dysmetabolic disorders that often accompany it.

These polyunsaturated fatty acids are administered in the form of oils (which contain them in the form of tri-, di- and monoglycerides, ester derivatives and free fatty acids) or phospholipids constituted by one or more molecular species, such as phosphatidylcholine, phosphatidylethanolamine, phosphatidylserine, phosphatidylglycerol, phosphatidylinositol, phosphatidic acid, mono- and dimethylphosphatidylethanolamine and their lysoderivatives.

Preferred sources of these polyunsaturated acids are: a) vegetable oils (olive, soya, corn, rice, sunflower, wheat germ, borage, evening primrose, linseed, etc.); b) marine oils (cod, tuna, shark, seal, krill, etc.); c) phospholipids of animal and/or plant origin (egg, soya, oats, seaweed, etc.); and d) phospholipids obtained by chemical and/or enzymatic synthesis.

WO 99/48386 discloses compositions of olive oils and lecithins and other nutritionals including limonene ( a terpene ) as food supplement.

Mariani C. et al., Rivista Italiana delle sostanze grasse, 79(3), 49-57, 2002, reports that olive oil contains phytol and terpene compounds.

WO 02/052955 discloses pharmaceutical, dietetic or alimentary compositions comprising a lipidic mixture rich in polyunsaturated acids and mono-terpenes.

It has now been found that the properties of polyunsaturated acids, either in free form or in form of phospholipids, is improved, particularly bioavailability, stability and organoleptic properties, by combining them with mono-terpenes and with one or more tryptophan and/or phytol derivatives.

The invention therefore provides, according to a first embodiment, compositions comprising phospholipids enriched in polyunsaturated fatty acids, mono-terpenes and one or more tryptophan or derivatives.

The invention also provides emulsions containing inverted micelles of said phospholipids, monoterpenes and one or more tryptophan and/or phytol derivatives in vegetable or marine oils.

The invention also refers to a process for the preparation of said oily emulsions containing inverted micelles.

The term "phospholipids enriched in polyunsaturated fatty acids" refers to phospholipids having at least 40%, preferably at least 80% and more preferably at least 90% of the acyl residues of the above mentioned polyunsaturated fatty acids.

The term "inverted micelles" has a definite meaning in the art and refers anyhow to aggregates wherein the hydrophilic, polar groups of the phospholipids are concentrated in the interior and the lipophilic groups extend towards and into the oily solvent.

The monoterpenes are preferably selected from d-limonene, γ-terpinene, thymol, carvacrol, p-cymene, β-carophyllene, sabinene, borneol, carveol, eugenol, eugenol acetate, menthol, pinene, β-pinene, rosemaric acid.

Essential oils comprising a mixture of said monoterpenes are preferably used.

The tryptophan derivative is selected from tryptophan, 5-hydroxytryptophan, melatonin, 3-indoleacetic acid, 3-indolepropionic acid, 3-indolebutyric acid, 3-indolepyruvic acid, 3-indolecarbinolic acid and organic and inorganic salts thereof compatible with human and animal diets. Tryptophan and melatonin are particularly preferred.

The phytol derivative is preferably selected from phytol, phytanic acid, phytenic acid, pristanic acid, their esters (phospholipids, glycolipids, di- or triglycerides) and their organic and inorganic salts compatible with human and animal diets. Phytol and phytanic acid are particularly preferred.

The compositions and emulsions of the invention preferably contain both the tryptophan and the phytol derivative, as defined above.

The preparation of the oily emulsions can be obtained with the following procedure:
a) the phospholipid(s), the phytol- and the tryptophan -derivative(s) are co-dissolved in an organic, apolar solvent(s). After a mild agitation at room temperature, the solvent(s) is then evaporated under vacuum to obtain a powder of the co-mixed phospholipid(s), phytol- and indole-derivative(s).
b) The essential oil(s) containing the monoterpene(s) are sprayed on this powder a) maintained in suspension through the influx of a strong air current.
c) The sprayed powder b) is then dissolved, under mild agitation at room temperature, into the polyunsatured oil(s). In few minutes a polyunsatured oily emulsion containing the "inverted micelles" of phospholipid(s), monoterpene(s), phytol- and indole-derivative(s) is so obtained.

Preferred sources of monoterpenes, tryptophan and phytol derivatives are suitable purified fractions of extracts of animal and/or plant origin obtainable by known methods; alternatively, they can be obtained by known chemical and/or enzymatic synthesis.

Polyunsaturated fatty acids (in the form of phospholipids and/or oils that contain them) are present in the compositions of the invention in such quantities as to provide doses ranging between 0.1 and 2000 mg, and preferably 10 to 200 mg/day/kg of body weight of the patient treated.

The monoterpenes are present in the compositions of the invention in such amounts as to provide doses ranging from 0.015 to 15, preferably from 0.1 to 3.0 mg/day/kg of body weight of the patient treated.

Tryptophan derivatives are present in the compositions of the invention in such quantities as to provide doses ranging between 0.001 and 50 mg, and preferably 0.05 to 5.0 mg/day/kg of body weight of the patient treated.

Phytol derivatives are present in the compositions of the invention in such quantities as to provide doses ranging between 0.005 and 50 mg, and preferably 0.2 to 20.0 mg/day/kg of body weight of the patient treated.

The compositions according to the invention can also contain other known nutritional constituents which further enhance their properties and therapeutic benefits.

Examples of these possible additional constituents are:
a) vitamins and vitamin-like factors with antioxidant activity, such as vitamin E and vitamin C and derivatives thereof; β-carotenes; vitamin A; vitamin D; lipoic acid; coenzyme Q; etc.
b) extracts of medicinal plants or vegetables based on simple polyphenols or flavonoids of different kinds; diterpenes; saponins; phytosterols; etc.
c) proteins, peptides or aminoacids and their derivatives such as glutathione, carnosine, carnitine, creatine, taurine, arginine, etc.
d) nucleic acids; oligonucleotides; nucleotides; nucleosides and the nitrogenous bases contained in them.
e) mineral salts and trace elements such as Mg; Ca; Zn; Se; Va; Cr; K; Na; etc.
f) yeasts, milk enzymes and extracts or purified fractions thereof (for example red yeast extracts such as "Monascus Ruber", titrated and standardised in Monacolina K).

Oils and phospholipids with the addition of suitable monoterpenes, tryptophan and phytol derivatives according to the invention can be used to enrich functional foods of a lipid nature (condiment oils, margarine, butter, mayonnaise, mustard, chocolate, etc.) or to make pharmaceutical preparations, preferably contained in hard or soft gelatine capsules. Alternatively, these oils and/or phospholipids with additions according to the invention can be sprayed onto protein media (proteins and/or peptides of plant or animal origin) or polysaccharide media (starches, cellulose, animal or plant fibres of different kinds, etc.) to obtain water-dispersible powders or granulates of a lipoprotein or liposaccharide nature respectively. These powders or granulates can be used to enrich functional foods (such as bread, pasta, bakery products, milk and derivatives, sausages, foods based on meat and fish, various types of drinks, etc.) or to make galenical preparations (such as tablets, capsules, dragées, cachets, etc.), mixed with conventional excipients.

Oils and/or phospholipids with additions according to the invention can also be used to make cosmetic preparations designed for topical use (such as lotions, creams, ointments, etc.) for the treatment or prevention of skin aging processes, alopecia, cellulitis and the like.

The invention is illustrated in detail in the examples set out below.

### Example 1

| | | |
|---|---|---|
| a) | Phosphatidylserine (Ph-Ser) obtained enzymatically from soya lecithins (degree of purity ≥ 90%) | 80 g |
| + b) | Fractions enriched with marine oil docosahexaenoic acid (DHA) (DHA = 80%) | 600 g |
| + c) | Melatonin | 1 g |
| + d) | Phytanic acid | 25 g |
| + e) | Essential oily mixture containing monoterpenes (d-limonene, y-terpinene, thymol, etc..) | 2 g |

Phosphatidylserine (a), melatonin (c) and phytanic acid (d) are co-dissolved in 20 vol. of chloroform-methanol (2:1, by vol.). The solvents are then evaporated under vacuum to obtain a co-mixed powder of (a)+(c)+(d). The essential oily mixture of monoterpenes (e) is sprayed on this co-mixed powder of (a)+(c)+(d). The sprayed powder is slowly dissolved, under mild agitation, into the marine oil (b). A marine oil emulsion containing the "inverted micelles" of phosphatidylserine, phytanic acid, melatonin and monoterpenes is so obtained.

### Example 2

| | | |
|---|---|---|
| a) | Soya lecithins with a high content of Ph-Ser (Ph-Ser = 20%) | 14 g |
| + b) | Oily mixture of olive oil (80%) and marine oils (20%), the latter containing 18% DHA and 12% eicosapentaenoic acid (EPA) | 1000 g |
| + c) | Tryptophan | 9 g |
| + d) | Melatonin | 0.03 g |
| + e) | Phytol | 6 g |
| + f) | Essential oily mixture containing monoterpenes (d-limonene, y-terpinene, thymol, etc..) | 4 g |

The olive and marine oil emulsion containing the "inverted micelles" of phosphatidylserine, tryptophan, melatonin, phytol and monoterpenes is prepared according to the procedure described in Example 1.

### Example 3

| | | |
|---|---|---|
| a) | Oily mixture of olive oil (85%) and marine oils (15%), the latter containing 12% DHA and 24% EPA | 1000 g |
| + b) | Soya lecithins with a high content of phosphatidylcholine (Ph-coline ≥ 85%) | 4 g |
| + c) | Melatonin | 0.001 g |
| + d) | Phytol | 4.5 g |
| + e) | Essential oily mixture containing monoterpenes (d-limonene, y-terpinene, thymol, etc..) | 2 g |

The olive and marine oil emulsion containing the "inverted micelles" of phosphatidylcoline, melatonin, phytol and monoterpenes is prepared according to the procedure described in Example 1.

### Example 4

| | | |
|---|---|---|
| a) | Rice oil containing tri- and diglycerides (the latter ≥ 40%) | 1000 g |
| + b) | Soya lecithins containing phosphatidylcholine (40%), phosphatidylethanolamine (30%), phosphatidylinositol (15%), phosphatidylserine (2%) and phosphatidic acid (2%) | 5 g |
| + c) | Melatonin | 0.001 g |
| + d) | Phytol | 5 g |
| + e) | Essential oily mixture containing monoterpenes (d-limonene, y-terpinene, thymol, etc..) | 2 g |

The rice oil emulsion containing the "inverted micelles" of phospholipids, melatonin, phytol and monoterpenes is prepared according to the procedure described in Example 1.

### Example 5

| | | |
|---|---|---|
| a) | Phosphatidylslycerol (PhG) obtained bv enzymatic method from soya lecithins (degree of purity ≥ 90%) | 80 g |
| + b) | 50% of linseed oil with an α-linolenic acid content of ≥ 55% and 50% of purified marine oil with an eicosapentaenoic acid content ≥ 50% | 600 g |
| + c) | Melatonin | 0.5 g |
| + d) | Phytol | 5 g |
| + e) | Essential oily mixture containing monoterpenes (d-limonene, y-terpinene, thymol, etc..) | 5 g |

The linseed and marine oil emulsion containing the "inverted micelles" of phosphatidylglycerol, melatonin, phytol and monoterpenes is prepared according to the procedure described in Example 1.

### Example 6

| | | |
|---|---|---|
| a) | Phosphatidylinositol (PhI) obtained by purification from soya lecithins (degree of purity ≥ 90%) | 100 g |
| + b) | Enriched fractions of marine oil EPA (EPA ≥ 80%) | 600 g |
| + c) | Melatonin | 1 g |
| + d) | Phytanic acid | 25 g |
| + e) | Essential oily mixture containing monoterpenes (d-limonene, y-terpinene, thymol, etc..) | 5 g |

The marine oil emulsion containing the "inverted micelles" of phosphatidylinositol, melatonin, phytanic acid and monoterpenes is prepared according to the procedure described in Example 1.

### Example 7

| | | |
|---|---|---|
| a) | Soya lecithins with a high content of phosphatidic acid (≥ 60%) | 100 g |
| + b) | 50% Linseed oil with an α-linolenic acid content ≥ 55% and 50% of purified marine oil with an eicosapentaenoic and docosahexapentaenoic acid content ≥ 20% | 600 g |
| + c) | Melatonin | 10 g |
| + d) | Phytanic acid | 25 g |
| + e) | Essential oily mixture containing monoterpenes (d-limonene, y-terpinene, thymol, etc..) and flavours | 25 g |

The linseed and marine oil emulsion containing the "inverted micelles" of phosphatidic acid, melatonin, phytanic acid and monoterpenes is prepared according to the procedure described in Example 1. This emulsion is preferably formulated for topical (cosmetic) use (for the treatment of alopecia, cellulite, skin aging, etc..).

### Example 8

| | | |
|---|---|---|
| a) | Soya phosphatidylcholine | 900 g |
| + b) | Green tea bioflavones with a high epigallocatechingallate content (≥ 45%) | 150 g |
| + c) | Marine oil containing 12% DHA, 24% EPA and 0,4% of essential oily mixtures containing monoterpenes (d-limonene, thymol, etc..) | 900 g |
| + d) | Melatonin | 1 g |
| + e) | Phytanic acid | 20 g |

Phosphatidylcholine is dissolved in hot ethanol and mixed with green tea bioflavones dissolved in ethanol. The ethanol solvent is evaporated and the granulate of bioflavones and phosphatidylcholine thus obtained is dissolved slowly, under stirring, in the oily solution constituted by compounds c) + d) + e). The marine oily emulsion which forms and contains the "inverted micelles" of phosphatidylcholine, bioflavones, melatonin and phytanic acid is used to prepare soft capsules, each containing 1 g of the micellar emulsion.

### PHARMACOLOGICAL AND/OR DIET THERAPY TESTS

In all the pharmacological and diet therapy tests conducted on animals and men, the effects obtainable with the administration of the oily emulsions, containing the "inverted micelles" of phospholipids with the additions according to the invention, have always proved highly significant, and in any event far superior to those obtained with the administration of similar doses of polyunsaturated oils and/or phospholipids alone, both in preventing the biological signs of aging (improved mitochondrial activity, improved membrane fluidity, improved antioxidant defences in the plasma and tissues, limitation and reduction of excess weight) and improving the clinical parameters tested for the prevention of aging and many of the associated dysmetabolic disorders: obesity and overweight, atherosclerosis, diabetes, hypertension, dyslipidaemia, Alzheimer's disease, Parkinson's disease, senile dementia, osteoporosis, mental and physical stress, depression, menopausal disorders, prostate hypertrophy, skin aging, alopecia, etc.

## Claims

1. Compositions comprising phospholipids enriched in polyunsaturated fatty acids, mono-terpenes and at least one or more tryptophan and/or phytol derivatives in form of emulsions containing inverted micelles, and vegetable or marine oils

2. Compositions comprising phospholipids enriched in polyunsaturated fatty acids, mono-terpenes and tryptophan derivatives selected from tryptophan, 5-hydroxytryptophan, melatonin, 3-indoleacetic acid, 3-indolepropionic acid, 3-indolebutyric acid, 3-indolepyruvic acid and 3-indolecarbinolic acid.

3. Compositions as claimed in claim 1 or 2 , wherein the polyunsaturated acids are selected from: eicosapentaenoic acid, docosahexaenoic acid, α-linoleic acid, γ-linolenic acid and di-oxo-γ-linolenic acid.

4. Compositions as claimed in claim 2 or 3, containing vegetable or marine oils.

5. Compositions as claimed in one or more of claims 1 to 4 wherein the monoterpenes are selected from d-limonene, γ-terpinene, thymol, carvacrol, p-cymene, β-carophyllene, sabinene, borneol, carveol, eugenol, eugenol acetate, menthol, pinene, β-pinene, rosemaric acid.

6. Compositions as claimed in one or more of claims 1 and 3 to 5, wherein the phytol derivatives are selected from phytol, phytanic acid, phytenic acid, pristanic acid, their esters (phospholipids, glycolipids, di- or triglycerides) and their organic and inorganic salts compatible with human and animal diets.

7. Compositions as claimed in one or more of claims 1 to 6, in the form of hard or soft gelatin capsules, water-dispersible lipoprotein or liposaccharide powders, topical formulations, or food additives.

8. Compositions as claimed in one or more of claims 1 to 7, also containing suitable excipients and/or nutritional components.

9. A process for the preparation of the emulsions comprising inverted micelles of claim 1, which comprises:
a) dissolving the phospholipid(s), the phytol and tryptophan derivative(s) in organic apolar solvents, followed by solvent evaporation;
b) spraying the essential oil(s) containing the monoterpene(s) on the powder obtained in a);
c) dissolving the sprayed powder in the polyunsatured oil(s).

## Patentansprüche

1. Zusammensetzungen in der Form von Emulsionen, die invertierte Mizellen und Pflanzen- oder marine Öle enthalten, umfassend Phospholipide, die mit mehrfach ungesättigten Fettsäuren, Monoterpenen und zumindest einem oder mehreren Tryptophan- und / oder Phytolderivaten angereichert sind.

2. Zusammensetzungen umfassend Phospholipide, die mit mehrfach ungesättigten Fettsäuren, Monoterpenen und Tryptophanderivaten ausgewählt aus Tryptophan, 5-Hydroxytryptophan, Melatonin, 3-Indolessigsäure, 3-Indolpropionsäure, 3-Indolbutansäure, 3-Indolbrenztraubensäure und 3-Indolkarbolsäure angereichert sind.

3. Zusammensetzungen wie in Anspruch 1 oder 2 beansprucht, wobei die mehrfach ungesättigten Fettsäuren ausgewählt sind aus: Eicosapentaensäure, Docosahexaensäure, α-Linolsäure, γ-Linolsäure und Di-oxo-γ-Linolsäure.

4. Zusammensetzungen wie in Anspruch 2 oder 3 beansprucht, die pflanzliche oder marine Öle enthalten.

5. Zusammensetzungen wie in einem oder mehreren der Ansprüche 1 bis 4 beansprucht, wobei die Monoterpene ausgewählt sind aus d-Limonen, γ-Terpinen, Thymol, Carvacrol, p-Cymol, β-Carophyllen, Sabinen, Borneol, Carveol, Eugenol, Eugenolacetat, Menthol, Pinen, β-Pinen, Rosmarinsäure.

6. Zusammenstzungen wie in einem oder mehreren der Ansprüche 1 und 3 bis 5 beansprucht, wobei die Phytolderivate ausgewählt sind aus Phytol, Phytansäure, Phytensäure, Pristinsäure, deren Esther (Phospholipide, Glycolipide, Di- oder Triglyzeride) und deren organischen und anorganischen Salzen, die mit menschlicher oder tierischer Kost vereinbar sind.

7. Zusammensetzungen wie in einem oder mehreren der Ansprüche 1 bis 6 beansprucht, in der Form von harten oder weichen Gelatinekapseln, in Wasser dispergierbaren Lipoprotein- oder Lipopolysaccharidpudern, topischen Formulierungen oder Lebensmittelzusätzen.

8. Zusammensetzungen wie in einem oder mehreren der Ansprüche 1 bis 7 beansprucht, ebenfalls geeignete Trägerstoffe und / oder alimentäre Bestandteile enthaltend.

9. Verfahren zur Herstellung der Emulsionen umfassend die invertierten Mizellen gemäß Anspruch 1, das umfasst:
a) Lösen des Pohospholipids / der Phospholipide, des Phytols und des Tryptophanderivats / der Tryptophanderivate in organischen aploaren Lösungsmiteln, gefolgt von der Evaporation des Lösungsmittels;
b) Aufsprühen des essentiellen Öls / der essentiellen Öle enthaltend das / die Monoterpen(e) auf das in a) erhaltene Puder;
c) Lösen des besprühten Puders in dem / den mehrfach ungesättigten Öl(en).

## Revendications

1. Compositions comprenant des phospholipides enrichis en acides gras polyinsaturés, monoterpènes et au moins un ou plusieurs dérivés du tryptophane et / ou du phytol sous forme d'émulsions contenant des micelles inverses et des huiles végétales ou marines.

2. Compositions comprenant des phospholipides enrichis en acides gras polyinsaturés, monoterpènes et dérivés du tryptophane choisis parmi le tryptophane, le 5-hydroxytryptophane, la mélatonine, l'acide 3-indole-acétique, l'acide 3-indole-propionique, l'acide 3-indole-butyrique, l'acide 3-indole-pyruvique et l'acide 3-indole-carbinolique.

3. Compositions selon la revendication 1 ou 2, dans lesquelles les acides polyinsaturés sont choisis parmi : l'acide éicosapentaénoïque, l'acide docosahexaénoïque, l'acide α-linoléique, l'acide γ-linolénique et l'acide di-oxo-γ-linolénique.

4. Compositions selon la revendication 2 ou 3, contenant des huiles végétales ou marines.

5. Compositions selon une ou plusieurs des revendications 1 à 4, dans lesquelles les monoterpènes sont choisis parmi le d-limonène, le γ-terpinène, le thymol, le carvacrol, le p-cymène, le β-carophyllène, le sabinène, le bornéol, le carvéol, l'eugénol, l'acétate d'eugénol, le menthol, le pinène, le β-pinède, l'acide romarinique.

6. Compositions selon une ou plusieurs des revendications 1 et 3 à 5, dans lesquelles les dérivés du phytol sont choisis parmi le phytol, l'acide phytanique, l'acide phyténique, l'acide pristanique, leurs esters (phospholipides, glycolipides, di- ou tri-glycérides) et leurs sels organiques et inorganiques compatibles avec des régimes alimentaires humains et animaux.

7. Compositions selon une ou plusieurs des revendications 1 à 6, sous la forme de capsules de gélatine dure ou molle, de poudres de lipoprotéines ou de liposaccharides dispersibles dans l'eau, de formulations topiques ou d'additifs alimentaires.

8. Compositions selon une ou plusieurs des revendications 1 à 7, contenant également des excipients et / ou des composants nutritionnels appropriés.

9. Procédé de préparation des émulsions comprenant des micelles inverses selon la revendication 1, qui comprend :
a) la dissolution du / des phospholipide(s), du / des dérivé(s) du phytol et du tryptophane dans des solvants organiques apolaires, suivie de l'évaporation des solvants ;
b) la pulvérisation de l'huile / des huiles essentielle(s) contenant le(s) monoterpène(s) sur la poudre obtenue en a) ;
c) la dissolution de la poudre pulvérisée dans l'huile / les huiles polyinsaturée(s).
